# EUROPÄISCHE PATENTANMELDUNG

(11) **EP 4 361 666 A2**
(43) Veröffentlichungstag der Anmeldung: **01.05.2024**
(21) Anmeldenummer: 23203936.2
(22) Anmeldetag: 17.10.2023
(51) Int. Cl.: G01S 7/35, G01S 13/36

(54) **VORRICHTUNG UND VERFAHREN ZUR ERFASSUNG EINES ABSTANDS**

(30) Priorität: 27.10.2022 DE 102022128470
(71) Anmelder: SICK AG, 79183 Waldkirch (DE)
(72) Erfinder: BALDISCHWEILER, Boris, 79194 Gundelfingen (DE)
(74) Vertreter: Manitz Finsterwald Patent- und Rechtsanwaltspartnerschaft mbB

(57) **Zusammenfassung**

Vorrichtung zur Erfassung eines Abstands, umfassend eine Sendeeinheit, die ausgebildet ist, ein Signal auf ein Objekt auszusenden, wobei das Signal einen Puls, insbesondere einen Rechteckpuls, mit konstanter Wiederholfrequenz umfasst, eine Empfangseinheit, die ausgebildet ist, ein von dem Objekt remittiertes Signal zu empfangen, und eine Auswertungseinheit, die ausgebildet ist, eine Grundwelle des remittierten Signals auszuwerten und basierend darauf einen Grobwert eines Abstands zu dem Objekt zu bestimmen und in Abhängigkeit des ermittelten Grobwerts eine Oberwelle des remittierten Signals auszuwerten und basierend darauf einen Feinwert eines Abstands zu dem Objekt zu bestimmen.

## Beschreibung

Die Erfindung betrifft eine Vorrichtung und ein Verfahren zur Erfassung eines Abstands.

Vorrichtungen und Verfahren, die ausgebildet sind, einen Abstand oder eine Entfernung zu einem Objekt zu erfassen sind prinzipiell bekannt, insbesondere solche, die ein optisches Prinzip zugrunde legen.

Beispielsweise sind phasenmessende und/oder laufzeitmessende Systeme bekannt. Dabei wird ein moduliertes optisches Signal ausgesendet und der Phasenunterschied und/oder die Laufzeit zum empfangenen Signal ausgewertet.

Dabei darf das Objekt oder Ziel, zu dem der Abstand bzw. die Entfernung erfasst wird, nicht weiter entfernt sein, als eine Periode des Signals, um den Abstand eindeutig zu erfassen.

Es ist eine Aufgabe eine verbesserte Vorrichtung und ein verbessertes Verfahren zur Erfassung eines Abstands anzugeben.

Diese Aufgabe wird gelöst durch eine Vorrichtung zur Erfassung eines Abstands, umfassend eine Sendeeinheit, die ausgebildet ist, ein Signal auf ein Objekt auszusenden, wobei das Signal einen Puls mit konstanter Wiederholfrequenz umfasst, eine Empfangseinheit, die ausgebildet ist, ein von dem Objekt remittiertes Signal zu empfangen, und eine Auswertungseinheit, die ausgebildet ist, eine Grundwelle des remittierten Signals auszuwerten und basierend darauf einen Grobwert eines Abstands zu dem Objekt zu bestimmen und in Abhängigkeit des ermittelten Grobwerts eine Oberwelle des remittierten Signals auszuwerten und basierend darauf einen Feinwert eines Abstands zu dem Objekt zu bestimmen.

Die Vorrichtung dient dabei dazu, einen Abstand zwischen der Vorrichtung bzw. der Sendeeinheit und/oder der Empfangseinheit und einem Objekt zu ermitteln. Bei dem Objekt kann es sich beispielsweise um ein Werkstück oder ein Raumelement handeln. Die Vorrichtung macht sich dabei Laufzeiten des Signals zunutze.

Die Vorrichtung umfasst dazu zunächst eine Sendeeinheit, die ausgebildet ist, ein Signal auf ein Objekt auszusenden. Bei dem Signal kann es sich insbesondere um ein elektromagnetisches Signal, wie beispielsweise ein Lichtsignal oder ein Radarsignal handeln. Alternativ oder zusätzlich kann es sich bei dem Signal auch um ein Schallsignal, insbesondere ein Ultraschallsignal handeln. Relevant ist vorliegend lediglich, dass das Signal auf ein Objekt ausgesendet wird, davon remittiert und wieder empfangen werden kann.

Dazu umfasst die Sendeeinheit eine geeignete Signalquelle, wie beispielswiese ein oder mehrere Lichtquellen, wie beispielsweise Leuchtdioden und/oder Laserquellen, die vorzugsweise Licht im Wellenlängenbereich von 500nm bis 2µm emittieren, eine oder mehrere Radarquelle und/oder eine oder mehrere Schall- insbesondere Ultraschallquellen.

Das ausgesendete Signal umfasst dabei einen Puls mit konstanter Wiederholfrequenz. Mit anderen Worten handelt es sich um ein Signal, in dem ein Puls regelmäßig und/oder periodisch wiederholt wird bzw. um eine periodische Pulsfolge.

Die Wiederholfrequenz der Grundwelle beträgt beispielsweise 500 kHz, 1 MHz, 10 MHz oder 100 MHz, insbesondere 15 MHz.

Das ausgesendete Signal wird dann von dem Objekt zumindest teilweise remittiert bzw. reflektiert und erreicht nach einer Laufzeit die erfindungsgemäße Vorrichtung.

Die Vorrichtung umfasst auch eine Empfangseinheit, die ausgebildet ist, ein von dem Objekt remittiertes Signal zu empfangen. Die Empfangseinheit weist dazu einen oder mehrere zu der Sendeeinheit korrespondierende Detektoren, Empfänger und/oder Sensoren auf, beispielsweise eine Photodiode, einen Radarsensor und/oder einen Schallsensor.

Die Vorrichtung umfasst auch eine Auswertungseinheit, die ausgebildet ist, eine Grundwelle des remittierten Signals auszuwerten und basierend auf der Auswertung der Grundwelle einen Grobwert eines Abstands zu dem Objekt zu bestimmen.

Dazu kann die Auswertungseinheit einen oder mehrere Prozessoren und/oder Signalverarbeitungsvorrichtungen umfassen, die sowohl mit der Sendeeinheit als auch der Empfangseinheit gekoppelt sind bzw. Signale davon empfangen können.

Die Bestimmung des Grobwerts des Abstands zu dem Objekt erfolgt dabei über die Laufzeit des ausgesendeten Signals. Insbesondere erfolgt die Bestimmung über die Auswertung eines Phasenunterschieds zwischen dem ausgesendeten und dem empfangenen Signal. Insbesondere ist die Wiederholfrequenz des Ausgesendeten Signals derart gewählt bzw. eingestellt, dass die Eindeutigkeit innerhalb des Messbereichs gegeben ist.

Erfindungsgemäß ist die Auswertungseinheit weiter ausgebildet, in Abhängigkeit des ermittelten Grobwerts eine Oberwelle des remittierten Signals auszuwerten und basierend auf der Auswertung der Oberwelle einen Feinwert eines Abstands zu dem Objekt zu bestimmen.

Üblicherweise wird bei einem Signal, insbesondere bei einem periodischen Signal, das eine Welle nachempfindet, eine Grundwelle erzeugt, die sich mit der Wiederholfrequenz wiederholt, auch eine oder mehrere Oberwellen erzeugt, die auch Oberschwingungen oder Harmonische genannt werden können und ein Vielfaches der Wiederholfrequenz der Grundwelle betragen.

Diese Oberwelle bzw. Oberwellen werden ebenso von dem Objekt remittiert und können erfasst und ausgewertet werden. Dadurch, dass die Oberwelle bzw. Oberwellen, die erfasst werden können, eine höhere Frequenz aufweisen als die Grundwelle, wird die Erfassungsgenauigkeit des zunächst basierend auf der Grundwelle erfasste Grobwerts somit verbessert.

Der ausgesendete Puls kann dabei einen beliebigen Duty-Cycle oder Aussteuerungsgrad aufweisen. Insbesondere weist der Puls einen Duty-Cycle von 20% bis 80%, weiter insbesondere von 40% bis 60%, insbesondere von 50%, auf.

Hierfür ist die Sendeeinheit ausgebildet, die Signalquelle hinreichend schnell an- und auszuschalten. Dies kann gleichzeitig als ein Referenzsignal für die Phasenmessung dienen. Insbesondere kann eine Referenzsignal für die Oberwelle aus dem erzeugten Takt der Sendeeinheit abgeleitet werden, beispielsweise durch Frequenzverdoppelung. Alternativ kann auch intern ein hochfrequenter Referenztakt erzeugt werden und die Referenzfrequenzen für Grund- und Oberwelle durch Teilen des Taktes erzeugt werden.

Es wird somit erfindungsgemäß zunächst, insbesondere unter Berücksichtigung einer maximalen Messdistanz, ein Grobwert erfasst und dann, basierend auf dem Grobwert, ein Feinwert ermittelt.

Durch Ausnutzung der Oberwellen wird ermöglicht, dass die Messgenauigkeit im Vergleich zu herkömmlichen Vorrichtungen und Verfahren verbessert wird. Insbesondere wird durch den Grobwert aus der Grundwelle zunächst eine Eindeutigkeit der Erfassung des Abstands zu dem Objekt hergestellt und dann aus dem Feinwert unter Ausnutzung der höheren Frequenz der Oberwelle der zunächst bestimmte Abstandswert genauer erfasst.

Der ausgesendete Puls kann eine beliebige Form aufweisen, beispielsweise als Sinuspuls oder Dreieckspuls ausgebildet sein, wobei insbesondere die Form der genannten Pulse von ihrer theoretischen Idealform abweichen kann.

Insbesondere handelt es sich bei dem ausgesendeten und periodisch wiederholten Puls um einen Rechteckpuls bzw. einen Puls mit einer überwiegend rechteckigen Pulsform. Durch Verwendung von Rechteckpulsen kann darüber hinaus eine höhere Energie auf der Grundwelle bereitgestellt werden als mit beispielsweise einem Sinuspuls bei zeitlich gleicher maximaler Amplitude.

Bei einem beispielhaft angenommenen Rechtecksignal besteht dieses typischerweise aus einer sinusförmigen Grundwelle und (theoretisch) unendlich vielen Oberwellen, die aus ungeraden ganzzahligen Vielfachen der Grundwelle bestehen, also dem 3-, 5-, 7-, etc. fachen der Grundfrequenz, jedoch in Ihrer Amplitude bzw. Signalstärke mit steigender Frequenz entsprechend abnehmen.

Die Vorrichtung kann dadurch weitergebildet werden, dass die Oberwelle in Abhängigkeit des ermittelten Abstands ausgewählt wird.

Insbesondere wird die Art bzw. die Ordinalzahl der Oberwelle in Abhängigkeit des ermittelten Abstands ausgewählt. Weiter insbesondere wird die Oberwelle in Abhängigkeit des ermittelten Grobwerts des Abstands ausgewählt.

Eine Auswahl kann vorliegend beispielsweise die erste, zweite oder dritte Oberwelle umfassen, basierend auf der dann der Feinwert ermittelt wird.

Es wird somit gemäß dieser Ausführungsform adaptiv, basierend auf dem tatsächlichen Abstand, der mit dem Grobwert erfasst wird, diejenige Oberwelle ausgewählt, die für einen Feinwert am geeignetsten ist.

Die Vorrichtung kann dadurch weitergebildet werden, dass die Auswertungseinheit weiter ausgebildet ist, eine Signalstärke der Grundwelle des remittierten Signals auszuwerten und in Abhängigkeit der ermittelten Signalstärke eine Oberwelle des remittierten Signals auszuwerten.

Insbesondere ist die Auswertungseinheit weiter ausgebildet, basierend auf der in Abhängigkeit der ermittelten Signalstärke ausgewählten Oberwelle einen Feinwert eines Abstands zu dem Objekt zu bestimmen.

Die Vorrichtung kann dadurch weitergebildet werden, dass die Auswertungseinheit ausgebildet ist, mehrere Oberwellen des remittierten Signals auszuwerten und basierend darauf einen Feinwert eines Abstands zu dem Objekt zu bestimmen.

Beispielsweise kann die erste und zweite Oberwelle, die erste und die dritte, die zweite und die dritte Oberwelle, die erste, zweite und dritte Oberwelle, etc. ausgewertet werden, insbesondere gemeinsam, um den Feinwert zu bestimmen. Dabei können die unterschiedlichen Oberwellen durch Mittelwertbildung oder Gewichtung unterschiedlich zur Bestimmung des Feinwerts herangezogen werden.

Die Vorrichtung kann dadurch weitergebildet werden, dass die Auswertungseinheit ausgebildet ist, die höchste Oberwelle des remittierten Signals auszuwerten und basierend darauf einen Feinwert eines Abstands zu dem Objekt zu bestimmen.

Bei der höchsten Oberwelle handelt es sich insbesondere um die höchste von der Empfangseinheit noch erfasste bzw. erfassbare Oberwelle.

Dadurch, dass die höchste Oberwelle zusätzlich zur Grundwelle ausgewertet wird, wird eine maximal mögliche Genauigkeit des Feinwerts und somit des ermittelten Abstands ermöglicht.

Die Vorrichtung kann dadurch weitergebildet werden, dass die Auswertungseinheit ausgebildet ist, eine Signalstärke der Oberwelle des remittierten Signals auszuwerten und in Abhängigkeit der ermittelten Signalstärke eine Oberwelle des remittierten Signals auszuwerten.

Insbesondere ist die Auswertungseinheit ausgebildet, basierend auf der in Abhängigkeit der ermittelten Signalstärke ausgewählten Oberwelle oder Oberwellen einen Feinwert eines Abstands zu dem Objekt zu bestimmen.

Beispielsweise kann durch Auswertung der Signalstärke diejenige Oberwelle oder diejenigen Oberwellen zur Bestimmung des Feinwerts herangezogen werden, die über einem vorbestimmten Schwellwert, insbesondere einer vorbestimmten minimalen Signalstärke liegen. Insbesondere kann so auch die höchste Oberwelle bestimmt werden.

Somit ist es möglich, dass nur solche Oberwellen zur Bestimmung des Feinwerts herangezogen werden, die eine bestimmte Güte in Bezug auf die Signalstärke und damit auf die Zuverlässigkeit erfüllen.

Die Vorrichtung kann dadurch weitergebildet werden, dass die Auswertungseinheit ausgebildet ist, einen Feinwert eines Abstands zu dem Objekt basierend auf der ausgewerteten Grundwelle und der ausgewerteten Oberwelle zu bestimmen.

Es kann also sowohl die Oberwelle als auch zusätzlich die Grundwelle (erneut) zur Bestimmung des Feinwerts herangezogen werden, wodurch die Zuverlässigkeit erhöht wird.

Die Vorrichtung kann dadurch weitergebildet werden, dass die Auswertungseinheit ausgebildet ist, die Auswertung der Grundwelle und die Auswertung der Oberwelle bei der Bestimmung des Feinwerts unterschiedlich zu gewichten.

Die Vorrichtung kann dadurch weitergebildet werden, dass die Auswertungseinheit ausgebildet ist, die Auswertung der Oberwelle bei der Bestimmung des Feinwerts höher zu gewichten als die Auswertung der Grundwelle.

Beispielsweise kann die Oberwelle mit einem Faktor 1, 2 oder 3 höher gewichtet werden, als die Grundwelle. Hierdurch wird die Genauigkeit erhöht, da der genauere Feinwert stärker in die Bestimmung einfließt als der Grobwert, der insbesondere der Eindeutigkeit dient.

Die Vorrichtung kann dadurch weitergebildet werden, dass die Auswertungseinheit ausgebildet ist, die Grundwelle und die Oberwelle nacheinander zu erfassen. Insbesondere wird in dieser Ausführungsform zunächst die Grundwelle eines ersten Pulses erfasst und ausgewertet und danach die Oberwelle eines darauffolgenden oder nachfolgenden Pulses ausgewertet.

Alternativ kann die Vorrichtung dadurch weitergebildet werden, dass die Auswertungseinheit ausgebildet ist, die Grundwelle und die Oberwelle gleichzeitig zu erfassen.

Die Vorrichtung kann auch dadurch weitergebildet werden, dass die Auswertungseinheit ausgebildet ist, einen Signal-Rausch-Abstand der Grundwelle und/oder der Oberwelle zu bestimmen und die Grundwelle und die Oberwelle bei der Bestimmung des Feinwerts aufgrund des ermittelten Signal-Rausch-Abstands unterschiedlich zu gewichten.

Die Vorrichtung kann dadurch weitergebildet werden, dass die Auswertungseinheit einen Analog-Digital-Umsetzer umfasst und die Auswertung des remittierten Signals und/oder die Bestimmung des Abstands digital erfolgt.

Die Vorrichtung kann dadurch weitergebildet werden, dass der Analog-Digital-Umsetzer ausgebildet ist, die Grundwelle und die Oberwelle frequenzumzusetzen.

Die Vorrichtung kann dadurch weitergebildet werden, dass die Auswertungseinheit einen Filter umfasst, der ausgebildet ist, eine resonante Überlagerung der Grundwelle und/oder der Oberwelle zu erzeugen.

Die Vorrichtung kann insbesondere dadurch weitergebildet werden, dass der Filter eine Verzögerungsleitung umfasst, die insbesondere auf beiden Seiten unangepasst ist, wodurch die empfangenen Wellenfronten der Grundwelle und/oder der Oberwellen in der Leitung hin- und herreflektiert werden und sich konstruktiv bzw. destruktiv überlagern.

Die Vorrichtung kann insbesondere dadurch weitergebildet werden, dass die Länge der Verzögerungsleitung derart gewählt ist, dass ein Viertel einer Periode eines Signals (insbesondere der Grundwelle oder einer der Oberwellen) hineinpasst. Dadurch wird das Signal um 180° verzögert.

Die Vorrichtung kann insbesondere dadurch weitergebildet werden, dass die Verzögerungsleitung derart ausgebildet ist, dass sie einen 180° Phasensprung generiert. Hierdurch kann insbesondere eine konstruktive Überlagerung erzeugt werden.

Durch so einen Filter wird insbesondere ein Rauschen beim Empfang der Grundwelle und/oder der Oberwellen unterdrückt.

Insbesondere sind Ausführungsformen der Vorrichtung bzw. der Auswertungseinheit ausgebildet, zunächst einen Grobwert eines Abstands zu erfassen und je nach dem Ergebnis der Erfassung eine oder mehrere Oberwellen auszuwerten und so einen Feinwert zu ermitteln.

Weiter insbesondere sind Ausführungsformen der Vorrichtung bzw. der Auswertungseinheit ausgebildet, zunächst einen Grobwert eines Abstands und eine Signalstärke zu erfassen und daraus beurteilend zu entscheiden, welche von den Oberwellen ausgewertet werden, um den Feinwert zu ermitteln.

Insbesondere sind Ausführungsformen der Vorrichtung bzw. Auswertungseinheit ausgebildet, sämtliche Oberwellen mit genügend Energie in der Auswertung zu berücksichtigen. Wenn beispielsweise die Grundwelle und 2 Oberwellen aktiv sind, können 3 Distanzwerte ermittelt werden. Der Distanzwert kann durch Mittelung der 3 Werte zustande kommen. Insbesondere können die höheren Frequenzen stärker gewichtet werden. Weiter insbesondere kann in die Gewichtung auch ein Signal-Rausch-Abstand, insbesondere der jeweiligen Oberwelle mit einfließen.

Durch Ausführungsformen der Vorrichtung wird somit insbesondere eine besonders adaptive Erfassung eines Abstands ermöglicht. Insbesondere sind Ausführungsformen dazu ausgebildet, ein nahes Objekt genauer zu erfassen als ein entferntes Objekt.

Die eingangs genannte Aufgabe wird auch gelöst durch ein Verfahren zur Erfassung eines Abstands, umfassend die Schritte Aussenden eines Signals auf ein Objekt, wobei das Signal ein Puls mit konstanter Wiederholfrequenz umfasst, Empfangen eines von dem Objekt remittierten Signals, Auswerten einer Grundwelle des remittierten Signals und basierend darauf Bestimmen eines Grobwerts eines Abstands zu dem Objekt und in Abhängigkeit des ermittelten Abstands: Auswerten einer Oberwelle des remittierten Signals und basierend darauf Bestimmen eines Feinwerts eines Abstands zu dem Objekt.

Bezüglich der Ausführungsformen des Verfahrens und deren Vorteile wird auf die oben beschriebenen Ausführungsformen der Vorrichtung verwiesen.

Ausführungsformen einer Vorrichtung und eines Verfahrens zur Erfassung eines Abstands werden nun im Zusammenhang mit den folgenden Figuren im Detail erläutert. Es zeigen:
- Fig. 1: eine Ausführungsform einer Vorrichtung zur Erfassung eines Abstands;
- Fig. 2: eine Ausführungsform eines Verfahrens zur Erfassung eines Abstands;
- Fig. 3: eine Ausführungsform eines Filters zur resonanten Überlagerung; und
- Fig. 4: einen beispielhaften Verlauf einer Grundwelle und deren Oberwellen.

Dabei bezeichnen gleiche Bezugszeichen gleiche oder ähnliche Merkmale.

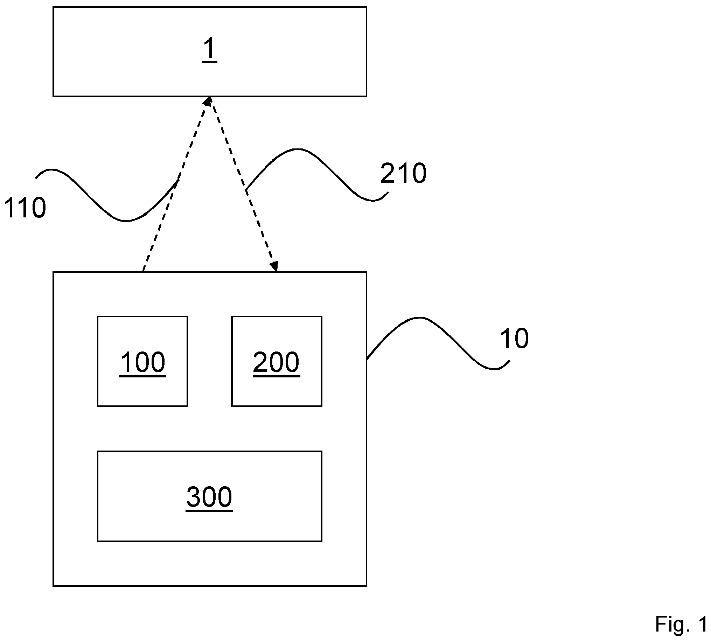

Fig. 1 zeigt eine Ausführungsform einer Vorrichtung 10 zur Erfassung eines Abstands zu einem Objekt 1.

Die Vorrichtung 10 umfasst dabei eine Sendeeinheit 100, die ausgebildet ist, ein Signal 110 auf ein Objekt 1 auszusenden, wobei das Signal 110 eine Vielzahl von Pulsen mit konstanter Wiederholfrequenz umfasst. Dabei handelt es sich insbesondere um einen Rechteckpuls.

Die Vorrichtung umfasst auch eine Empfangseinheit 200, die ausgebildet ist, ein von dem Objekt remittiertes Signal 210 zu empfangen.

Die Vorrichtung umfasst auch eine Auswertungseinheit 300, die ausgebildet ist, eine Grundwelle des remittierten Signals 210 auszuwerten und basierend darauf einen Grobwert eines Abstands zu dem Objekt 1 zu bestimmen und in Abhängigkeit des ermittelten Grobwerts eine Oberwelle des remittierten Signals 210 auszuwerten und basierend darauf einen Feinwert eines Abstands zu dem Objekt 1 zu bestimmen.

Dabei wird die Oberwelle, auf der basierend der Feinwert ermittelt wird, durch die Auswertungseinheit 300 in Abhängigkeit des ermittelten Abstands ausgewählt.

Die Auswertungseinheit 300 ist dabei weiter ausgebildet, eine Signalstärke der Grundwelle des remittierten Signals 210 auszuwerten und in Abhängigkeit der ermittelten Signalstärke eine Oberwelle des remittierten Signals 210 auszuwerten.

Die Auswertungseinheit 300 ist auch ausgebildet, mehrere Oberwellen des remittierten Signals 210 auszuwerten und basierend darauf einen Feinwert eines Abstands zu dem Objekt 1 zu bestimmen.

Die Auswertungseinheit 300 ist ebenso ausgebildet, die höchste Oberwelle des remittierten Signals 210 auszuwerten und basierend darauf einen Feinwert eines Abstands zu dem Objekt 1 zu bestimmen.

Die Auswertungseinheit 300 ist auch ausgebildet, eine Signalstärke der Oberwelle des remittierten Signals 210 auszuwerten und in Abhängigkeit der ermittelten Signalstärke eine Oberwelle des remittierten Signals 210 auszuwerten.

Die Auswertungseinheit 300 ist weiter ausgebildet, einen Feinwert eines Abstands zu dem Objekt 1 basierend auf der ausgewerteten Grundwelle und der ausgewerteten Oberwelle zu bestimmen.

Die Auswertungseinheit 300 ist auch ausgebildet, die Auswertung der Grundwelle und die Auswertung der Oberwelle bei der Bestimmung des Feinwerts unterschiedlich zu gewichten, insbesondere derart, dass die Bestimmung des Feinwerts höher gewichtet wird als die Bestimmung der Grundwelle.

Die Auswertungseinheit 300 kann auch ausgebildet sein, die Grundwelle und die Oberwelle nacheinander zu erfassen. Dies ist insbesondere dann vorteilhaft, wenn zunächst der Abstand basierend auf der Grundwelle grob erfasst wird und danach genau diejenige Oberwelle zur Erfassung des Feinwerts verwendet wird, die zu dem erfassten Abstand passt.

So ist es insbesondere möglich, die Empfangseinheit besonders schmalbandig zu betreiben und beispielsweise mit einem durchstimmbaren Filter oder Mischer auszuführen. Weiter insbesondere könnte der Analog-Digital-Umsetzer gleichzeitig als Mischer betrieben werden.

Alternativ kann die Auswertungseinheit ausgebildet sein, die Grundwelle und die Oberwelle gleichzeitig zu erfassen.

Die Auswertungseinheit 300 ist dabei weiter ausgebildet, einen Signal-Rausch-Abstand der Grundwelle und/oder der Oberwelle zu bestimmen und die Grundwelle und die Oberwelle bei der Bestimmung des Feinwerts aufgrund des ermittelten Signal-Rausch-Abstands unterschiedlich zu gewichten.

Die Auswertungseinheit 300 kann dabei einen Analog-Digital-Umsetzer umfassen, der aus Gründen der Übersichtlichkeit nicht gezeigt ist. Dabei kann die Auswertung des remittierten Signals und/oder die Bestimmung des Abstands digital, insbesondere ausschließlich digital erfolgen. Alternativ kann die Auswertung aber auch rein elektronisch erfolgen.

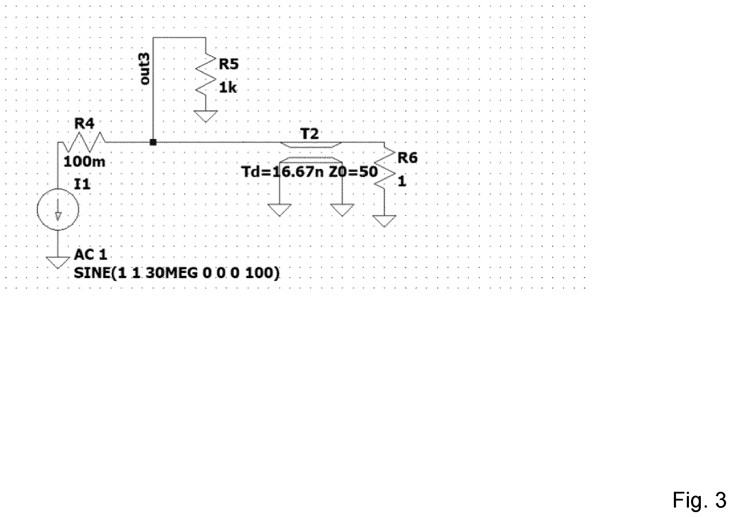

Die Auswertungseinheit 300 kann auch einen Filter umfassen, der ebenso aus Gründen der Übersichtlichkeit nicht gezeigt ist und der ausgebildet ist, eine resonante Überlagerung der Grundwelle und/oder der Oberwelle zu erzeugen. Der Filter und insbesondere dessen Funktionen werden im Zusammenhang mit Fig. 3 näher erläutert.

Zusätzlich zu den zuvor beschriebenen Einheiten und Elementen kann die Auswertungseinheit 300 bzw. die Vorrichtung 100 noch einen oder mehrere Verstärker und/oder einen oder mehrere Filter, insbesondere Tiefpassfilter und/oder Bandpassfilter, insbesondere einstellbare Bandpassfilter, umfassen, welche ebenfalls nicht in Fig. 1 gezeigt sind.

Ausführungsformen der Vorrichtung 100 sind insbesondere derart ausgelegt, dass in einem maximalen Messabstand die gewünschte Remission noch mit ausreichender Genauigkeit detektiert werden kann.

Es ist bekannt, dass eine in den Freiraum ausgesendete Welle quadratisch zum Abstand abfällt. Bei der halben Distanz steht somit die 4-fache Leistung zur Verfügung bzw. wird nur ein ¼ der Sendeleistung benötigt.

Wenn man beispielsweise vorliegend ein Rechtecksignal mit 50% Duty-Cycle zugrunde legt, erhält man neben der maximalen Energie bei der Wunschfrequenz auch einen Ausschlag bei der 3-,5-, 7-, etc. fachen Frequenz.

Bei der 3-fachen Frequenz ist dann noch 33,3,% bei der fünffachen 20% und bei der 7-fachen 14,3% der Signalleistung enthalten. Die Vorrichtung könnte also alle Ziele bei etwas über der halben Messdistanz auch mit der dreifachen Frequenz messen und somit die Messgenauigkeit erhöhen.

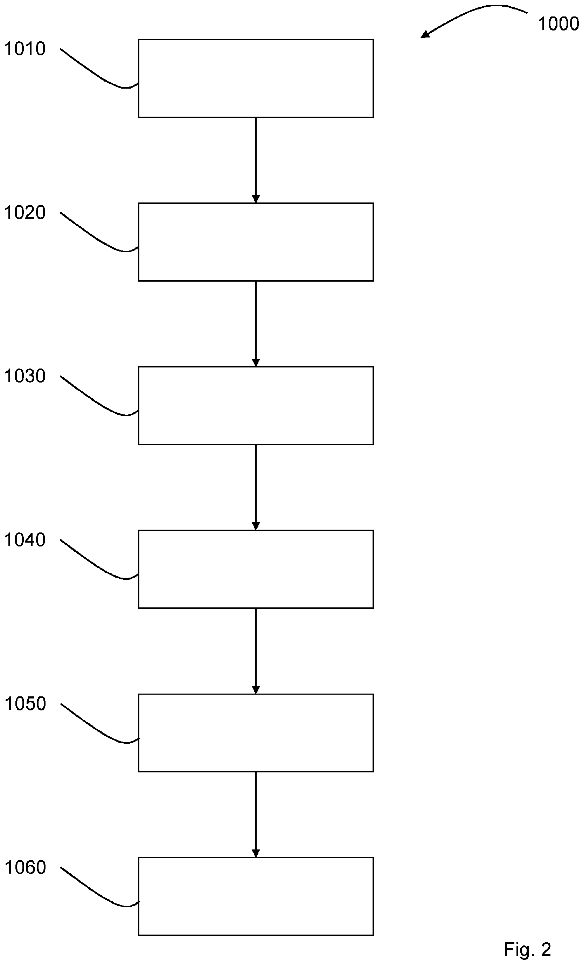

Fig. 2 zeigt ein Verfahren 1000 zur Erfassung eines Abstands zu einem Objekt.

Das Verfahren 1000 umfasst in einem ersten Schritt 1010 ein Aussenden eines Signals auf ein Objekt, wobei das Signal mehrere Pulse, insbesondere Rechteckpulse, mit konstanter Wiederholfrequenz umfasst.

Das Verfahren 1000 umfasst in einem weiteren Schritt 1020 ein Empfangen eines von dem Objekt remittierten Signals.

Das Verfahren umfasst in einem weiteren Schritt 1030 ein Auswerten einer Grundwelle des remittierten Signals

Das Verfahren 1000 umfasst in einem weiteren Schritt 1040 ein Bestimmen eines Grobwerts eines Abstands zu dem Objekt, basierend auf der Auswertung der Grundwelle.

Das Verfahren 1000 umfasst in einem weiteren Schritt 1050 ein Auswerten einer Oberwelle des remittierten Signals in Abhängigkeit des ermittelten Abstands.

Das Verfahren 1000 umfasst in einem weiteren Schritt 1060 ein Bestimmen eines Feinwerts eines Abstands zu dem Objekt basierend auf der Auswertung der Oberwelle.

Danach endet das Verfahren 1000 und kann insbesondere erneut von vorne beginnen. Insbesondere wird das Verfahren kontinuierlich wiederholt.

Fig. 3 zeigt einen Teil eines Filters 310 der Auswertungseinheit 300 wie in Fig. 1 beschrieben.

Der Filter 310 dient dabei der Erzeugung von resonanten Überlagerungen der Grundwelle und/oder der Oberwellen.

Der Filter 310 weist dazu eine Verzögerungsleitung auf, deren Bauelemente im Detail in Fig. 3 gezeigt sind.

Wie aus Fig. 3 ersichtlich ist die Verzögerungsleitung bzw. der Filter 310 auf beiden Seiten unangepasst. Dadurch werden die empfangenen Wellenfronten der Grundwelle und/oder der Oberwellen in der Leitung hin- und herreflektiert und überlagern sich konstruktiv bzw. destruktiv.

Dabei ist die Länge der Leitung derart gewählt, das ein Viertel einer Periode eines Signals hineinpasst. Vorliegend ist die Länge insbesondere derart gewählt, dass ein Viertel einer Periode eines Signals mit einer Wiederholfrequenz von 15 MHz hineinpasst.

Das Signal wird so durch Hin- und Rückweg um 180° verzögert. Zusätzlich kann ein 180° Phasensprung generiert werden, durch Spannungswelle an R6 und Stromwelle an R5, womit dann eine konstruktive Überlagerung entsteht.

Für 30 MHz verzögert sich das Signal um 360° und in Kombination mit dem Phasensprung entsteht dann eine destruktive Überlagerung. Daher wird die 15 MHz verstärkt die 30 MHz gedämpft und die 45 MHz, 75MHz usw. wieder verstärkt. Dies korrespondiert zu den Linien, welche ein Rechtecksignal im Frequenzraum erzeugt.

Alternativ kann der Filter mit einer ähnlichen oder gleichen Funktion auch durch Strukturen aus Induktivitäten und Kondensatoren ausgebildet sein.

Durch so einen Filter wird insbesondere ein Rauschen beim Empfang der Grundwelle und/oder der Oberwellen unterdrückt. Dieser Filter eignet sich weiter insbesondere dann, wenn sowohl die Grundwelle als auch eine oder mehrere Oberwellen gleichzeitig erfasst und ausgewertet werden sollen.

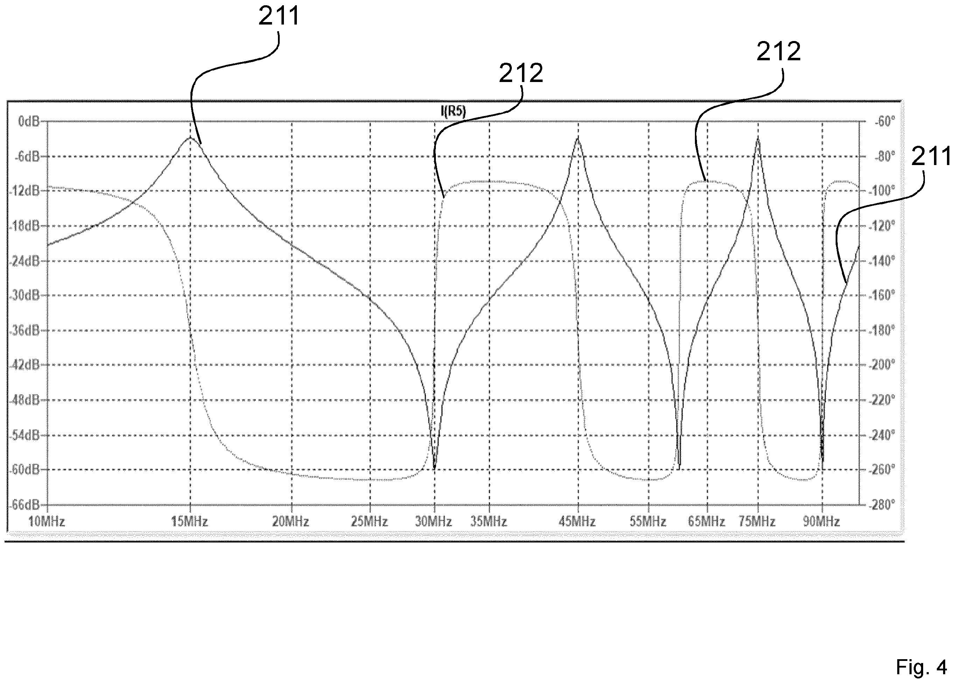

Fig. 4 zeigt einen beispielhaften Verlauf der Stromwelle an R5 wie in Fig. 3 gezeigt. Dabei bezeichnet 211 den Verlauf der Amplitude und 212 den Verlauf der Phase, jeweils über die Frequenz aufgetragen.

Insbesondere ersichtlich sind hier die beispielhaften Amplitudenausschläge bei 15 MHz, nämlich für die Grundwelle, bei 45 MHz für die erste Oberwelle und bei 75 MHz für die zweite Oberwelle und die dazu korrespondierenden Phasenumkehren.

### Bezugszeichenliste

- 1: Objekt
- 10: Vorrichtung
- 100: Sendeeinheit
- 110: ausgesendetes Signal
- 200: Empfangseinheit
- 210: remittiertes Signal
- 211: Signalverlauf
- 212: Signalverlauf
- 300: Auswertungseinheit
- 310: Filter
- 1000: Verfahren
- 1010: Verfahrensschritt
- 1020: Verfahrensschritt
- 1030: Verfahrensschritt
- 1040: Verfahrensschritt
- 1050: Verfahrensschritt
- 1060: Verfahrensschritt

## Patentansprüche

1. Vorrichtung (10) zur Erfassung eines Abstands,
umfassend:
- eine Sendeeinheit (100), die ausgebildet ist, ein Signal (110) auf ein Objekt (1) auszusenden, wobei das Signal (110) einen Puls, insbesondere einen Rechteckpuls, mit konstanter Wiederholfrequenz umfasst,
- eine Empfangseinheit (200), die ausgebildet ist, ein von dem Objekt remittiertes Signal (210) zu empfangen; und
- eine Auswertungseinheit (300), die ausgebildet ist, eine Grundwelle des remittierten Signals (210) auszuwerten und basierend darauf einen Grobwert eines Abstands zu dem Objekt (1) zu bestimmen und in Abhängigkeit des ermittelten Grobwerts eine Oberwelle des remittierten Signals (210) auszuwerten und basierend darauf einen Feinwert eines Abstands zu dem Objekt (1) zu bestimmen.

2. Vorrichtung (10) nach Anspruch 1,
wobei die Oberwelle in Abhängigkeit des ermittelten Abstands ausgewählt wird.

3. Vorrichtung (10) nach Anspruch 1 oder 2,
wobei die Auswertungseinheit (300) weiter ausgebildet ist, eine Signalstärke der Grundwelle des remittierten Signals (210) auszuwerten und in Abhängigkeit der ermittelten Signalstärke eine Oberwelle des remittierten Signals (210) auszuwerten.

4. Vorrichtung (10) nach einem der vorstehenden Ansprüche,
wobei die Auswertungseinheit (300) ausgebildet ist, mehrere Oberwellen des remittierten Signals (210) auszuwerten und basierend darauf einen Feinwert eines Abstands zu dem Objekt (1) zu bestimmen.

5. Vorrichtung (10) nach einem der vorstehenden Ansprüche,
wobei die Auswertungseinheit (300) ausgebildet ist, die höchste Oberwelle des remittierten Signals (210) auszuwerten und basierend darauf einen Feinwert eines Abstands zu dem Objekt (1) zu bestimmen.

6. Vorrichtung (10) nach einem der vorstehenden Ansprüche,
wobei die Auswertungseinheit (300) ausgebildet ist, eine Signalstärke der Oberwelle des remittierten Signals (210) auszuwerten und in Abhängigkeit der ermittelten Signalstärke eine Oberwelle des remittierten Signals (210) auszuwerten.

7. Vorrichtung (10) nach einem der vorstehenden Ansprüche,
wobei die Auswertungseinheit (300) ausgebildet ist, einen Feinwert eines Abstands zu dem Objekt (1) basierend auf der ausgewerteten Grundwelle und der ausgewerteten Oberwelle zu bestimmen.

8. Vorrichtung (10) nach Anspruch 7,
wobei die Auswertungseinheit (300) ausgebildet ist, die Auswertung der Grundwelle und die Auswertung der Oberwelle bei der Bestimmung des Feinwerts unterschiedlich zu gewichten.

9. Vorrichtung (10) nach Anspruch 8,
wobei die Auswertungseinheit (300) ausgebildet ist, die Auswertung der Oberwelle bei der Bestimmung des Feinwerts höher zu gewichten als die Auswertung der Grundwelle.

10. Vorrichtung (10) nach einem der vorhergehenden Ansprüche,
wobei die Auswertungseinheit (300) ausgebildet ist, die Grundwelle und die Oberwelle nacheinander zu erfassen.

11. Vorrichtung (10) nach einem Ansprüche 1 bis 9,
wobei die Auswertungseinheit (300) ausgebildet ist, die Grundwelle und die Oberwelle gleichzeitig zu erfassen.

12. Vorrichtung (10) nach einem der vorhergehenden Ansprüche,
wobei die Auswertungseinheit (300) ausgebildet ist, einen Signal-Rausch-Abstand der Grundwelle und/oder der Oberwelle zu bestimmen und die Grundwelle und die Oberwelle bei der Bestimmung des Feinwerts aufgrund des ermittelten Signal-Rausch-Abstands unterschiedlich zu gewichten.

13. Vorrichtung (10) nach einem der vorhergehenden Ansprüche,
wobei die Auswertungseinheit (300) einen Analog-Digital-Umsetzer umfasst und wobei die Auswertung des remittierten Signals und/oder die Bestimmung des Abstands digital erfolgt.

14. Vorrichtung (10) nach einem der vorhergehenden Ansprüche,
wobei die Auswertungseinheit (300) einen Filter (310) umfasst, der ausgebildet ist, eine resonante Überlagerung der Grundwelle und/oder der Oberwelle zu erzeugen.

15. Verfahren (1000) zur Erfassung eines Abstands,
umfassend die Schritte:
- Aussenden (1010) eines Signals (110) auf ein Objekt (1), wobei das Signal (110) einen Puls, insbesondere einen Rechteckpuls, mit konstanter Wiederholfrequenz umfasst;
- Empfangen (1020) eines von dem Objekt (1) remittierten Signals (210);
- Auswerten (1030) einer Grundwelle des remittierten Signals (210) und basierend darauf Bestimmen (1040) eines Grobwerts eines Abstands zu dem Objekt (1); und
- in Abhängigkeit des ermittelten Abstands: Auswerten (1050) einer Oberwelle des remittierten Signals (210) und basierend darauf Bestimmen (1060) eines Feinwerts eines Abstands zu dem Objekt (1).
